# EUROPÄISCHE PATENTSCHRIFT

(11) **EP 1 358 558 B1**
(45) Veröffentlichungstag und Bekanntmachung des Hinweises auf die Patenterteilung: **13.04.2011**
(21) Anmeldenummer: 02701240.0
(22) Anmeldetag: 25.01.2002
(51) Int. Cl.: G06F 12/14

(54) **MIKROPROZESSORSCHALTUNG FÜR DATENTRÄGER UND VERFAHREN ZUM ORGANISIEREN DES ZUGRIFFS AUF IN EINEM SPEICHER ABGELEGTEN DATEN**
MICROPROCESSOR CIRCUIT FOR DATA CARRIERS AND A METHOD FOR ORGANISING ACCESS TO DATA STORED IN A MEMORY
CIRCUIT DE MICROPROCESSEUR DESTINÉ A DES SUPPORTS DE DONNÉES ET PROCEDÉ PERMETTANT D'ORGANISER L'ACCÈS A DES DONNÉES ARCHIVÉES DANS LA MÉMOIRE

(30) Priorität: 06.02.2001 DE 10105284
(43) Veröffentlichungstag der Anmeldung: 05.11.2003
(73) Patentinhaber: Infineon Technologies AG, 85579 Neubiberg (DE)
(72) Erfinder: BRÜCKLMAYR, Franz-Josef, 86916 Kaufering (DE); FRIEDINGER, Hans, 80636 München (DE); SEDLAK, Holger, 95658 Egmating (DE); MAY, Christian, 81677 München (DE)
(74) Vertreter: Viering, Jentschura & Partner
(86) Internationale Anmeldenummer: PCT/DE2002/000256
(87) Internationale Veröffentlichungsnummer: WO 2002/063463

(56) Entgegenhaltungen:
- EP-A- 0 512 542
- DE-A- 19 925 195
- US-A- 5 657 475
- US-A- 5 845 331

## Beschreibung

Die Erfindung betrifft eine Mikroprozessorschaltung gemäß dem Oberbegriff des Anspruches 1 sowie ein Verfahren zum Organisieren des Zugriffs auf in einem Speicher abgelegten Daten oder Programmen gemäß dem Oberbegriff des Anspruches 14.

Mikroprozessorschaltungen der genannten Art finden bevorzugt Anwendung in sogenannten Chipkarten, das heißt Ausweiskarten, Kreditkarten, Buchungskarten und dergleichen, die mit einem integrierten Schaltkreis ausgestattet sind. Die Mikroprozessorschaltungen sind auch in sogenannten Zahlungsverkehrsmodulen einsetzbar, die mit den oben genannten Karten über entsprechende Schnittstellen kommunizieren. Allgemein kann die Mikroprozessorschaltung in personalisierten Endgeräten, wie zum Beispiel Handys, PCs oder PDAs, eingesetzt werden, die für den Zahlungsverkehr geeignet sind.

Einer der wesentlichen Vorteile einer solchen Karte besteht in der vielfältigen Verwendungsmöglichkeit seitens des Karteninhabers. Der im integrierten Schaltkreis enthaltene Mikroprozessor und die dazu gehörigen Speichermittel erlauben eine umfangreiche Datenverarbeitung in der Karte selbst.

Der Kartenhersteller kann den Mikroprozessor mit einem fest gespeicherten Betriebssystem ausstatten, welches grundlegende Funktionen übernimmt, beispielsweise Prozeduren zum Vergleichen eines extern eingegebenen Codes mit gespeichertem Code und dergleichen. Die zu dem Mikroprozessor gehörigen Speicher dienen außer zur Abspeicherung des Betriebssystems auch zum Abspeichern bestimmter Anwendungen, welche aus mehreren Funktionen bestehen kann, sowie Parametern, die zum Beispiel zur Sicherheitsüberprüfung notwendig sind und auf jeden Fall geheimgehalten werden müssen.

Eine vielseitige Anwendung der Karten erreicht man dann, wenn man von einem Betriebssystem mit zugehörigen Programmen ausgeht, gewisse Schnittstellen definiert und einen Speicher oder Speicherbereich für ein Fremdprogramm reserviert. Der Kartenhersteller stellt dann für die Anwender, das heißt für die kartenausgebende Organisation, einen Speicher beziehungsweise Speicherbereich zur Einprogrammierung ihres Fremdprogramms zur Verfügung. In diesem Fremdprogramm kann die Organisation dann spezifische Operationen festlegen, die unabhängig vom Betriebssystem sind und die lediglich die spezielle Organisation betreffen.

Ein zukünftiges Szenario könnte sein, daß nicht nur eine einzige Organisation ihr Fremdprogramm in der vorgefertigten Chipkarte ablegt, sondern mehrere unterschiedliche Organisationen ihre entsprechenden Programme auf der Chipkarte abspeichern. In diesem Fall muß dafür gesorgt werden, daß sicherheitsrelevante Daten, die Bestandteil des Betriebssystems oder auch der einzelnen Fremdprogramme sind, vor unbefugtem Zugriff geschützt werden.

Denkbar ist, daß ein Fremdprogramm einen Programmteil, auch Programmbibliothek genannt, eines anderen Fremdprogrammes aufruft. Aufgrund einer üblichen Speicherorganisation können sich alle Programmteile im sogenannten gleichen logischen Adreßbereich befinden. In einem Adreßraum eines Speicherbereiches befinden sich dabei sowohl Code als auch Daten eines Fremdprogrammes. Der Code selber kann hierbei wiederum aus einer Mehrzahl an Programmteilen, den Bibliotheken oder Funktionen, bestehen. Ruft beispielsweise ein Fremdprogramm A, auch Applikation genannt, wechselweise eine Programmbibliothek B eines Fremdprogrammes B sowie eine Programmbibliothek C eines weiteren Fremdprogrammes C im gleichen logischen Adreßraum auf, so kann ohne weiteren Schutzmechanismus die Programmbibliothek B durch einen Schreibvorgang auf Daten der Programmbibliothek C Daten zerstören oder durch einen Lesevorgang an sich geheime Daten der Programmbibliothek C ausspionieren. Die Programmbibliothek C wäre damit für den weiteren Einsatz auch in anderen Fremdprogrammen unbrauchbar, wodurch der Wert der Programmbibliothek C zerstört wäre.

Zur Lösung dieses Problemes ist es bekannt, die Programmteile, also die Programmbibliotheken, durch Hardware-Mechanismen im Speicher voneinander zu trennen und Datenzugriffe zwischen den Programmbibliotheken nur über das Betriebssystem zu erlauben. Die hierdurch erzielte Sicherheit schlägt sich jedoch in einem hohen Programmieraufwand als auch in einer aufwendigen Hardware nieder. Zudem reduziert sich die Performance gegenüber einer direkten Kommunikation zwischen den Programmbibliotheken. Eine hohe Sicherheit geht somit zu Lasten der Performance.

Aus der EP 0 512 542 B1 ist eine Mikroprozessorschaltung zur Verhinderung des Zugriffs auf in Speichern abgelegte Daten oder Programme bekannt, die wenigstens einen Mikroprozessor, einen Speicher für ein Betriebssystem und wenigstens einen Speicher zur freien Programmierung mit individuellen Fremdprogrammen aufweist. Dabei sind mehrere frei programmierbare Speicherbereiche vorgesehen, deren Adreßräume bis auf wenigstens eine höchstwertige Stelle gleich sind. Die Mikroprozessorschaltung weist weiterhin Mittel auf, die die jeweils höchstwertige, einem Speicherbereich zugeordnete Stelle jeweils vor der Adressierung eines Speicherbereiches in ein erstes Hilfsregister laden und die jeweils höchstwertige Stelle des adressierten Speicherbereiches in ein zweites Hilfsregister laden und die dann einen Vergleich des ersten und des zweiten Hilfsregisters vornehmen. Bei einer Änderung des Hilfsregisterinhalts wird ein Sperrsignal erzeugt, um hierdurch festzustellen, ob ein Fremdprogramm ausgeführt wird, das auf eine unerlaubte Adresse zugreift.

Nachteilig bei diesem Vorgehen ist, dass grundsätzlich der Zugriff auf ein anderes Fremdprogramm unterbunden wird. Ein gegenseitiges Nutzen bestimmter Programmteile anderer Fremdprogramme ist nicht möglich. Somit müssen gegebenenfalls mehrere Fremdprogramme identische Programmteile mit gleicher Funktionalität beinhalten. Bei tragbaren Datenträgern, die in der Regel einen nur begrenzten Speicherbereich aufweisen, ist dies jedoch höchst nachteilig.

DE 199 25 195 A beschreibt ein Verfahren zur Verwaltung eines Speichers, wobei Zugriffe auf in einem Speicher abgelegte Daten oder Programme überwacht werden.

In US 5,657,475 werden ein System und ein Verfahren zur Detektion und zum Schutz vor Speicherzugriffen beschrieben. Der verwendete Prozessor weist eine geschützte Speichereinheit auf, welche Speicherzugriffe kontrolliert, indem er die über den Bus gesendeten Informationen überwacht.

In US 5,845,331 wird ein Speichersystem mit geschützten Zeigern beschrieben, wobei ein geteilter Speicher geschützte Zeiger verwendet, um geschützte Segmente des Speichers zu identifizieren und einen erlaubten Zugriff einer Stelle zuzuordnen, die von dem geschützten Zeiger spezifiziert wurde.

Der Erfindung liegt die Aufgabe zugrunde, eine Schaltung sowie ein Verfahren anzugeben, die bzw. das mit einfachen Maßnahmen auch einen Zugriff auf Fremdprogramme ermöglicht.

Diese Aufgaben werden erfindungsgemäß durch die in den Ansprüchen 1 und 14 angegebenen Merkmale jeweils gelöst. Erfindungsgemäß wird diese Aufgabe dadurch gelöst, dass jedem Adressraum eines Speicherbereiches wenigstens eine Zugriffsrechte beinhaltende Bitfolge zugeordnet ist. Anders formuliert bedeutet dies, dass jeder logische Adressraum in mindestens einen Adressblock unterteilt ist, dem eine Zugriffsrechte beinhaltende Bitfolge zugeordnet ist.

Die Erfindung sieht somit einen Hardware-Schutzmechanismus vor, der eine direkte Kommunikation zwischen Programmteilen unterschiedlicher Fremdprogramme, die sich im selben logischen Adressraum befinden, erlaubt. Dabei ist jedoch keine Kontrolle durch das Betriebssystem notwendig.

Dabei ist jeder Adresse eines Adressraumes eine Zugriffsrechte beinhaltende Bitfolge zugeordnet. Mit anderen Worten bedeutet dies, dass sowohl einer Code-Zeile als auch einem Daten-Wort eine Zugriffsrechte beinhaltende Bitfolge zugeordnet ist. Somit kann selektiv bestimmten Datenbereichen ein gewünschtes Recht zugewiesen werden.

Die die Zugriffsrechte beinhaltende Bitfolge beinhaltet ein erstes und ein zweites Zugriffsrecht, wobei das erste Zugriffsrecht Zugriffe zwischen zwei Speicherbereichen (22, 23, 24) und das zweite Zugriffsrecht Zugriffe innerhalb eines Speicherbereiches (22, 23, 24) regelt.

Unter der Annahme, dass in unterschiedlichen Speicherbereichen unterschiedliche Fremdprogramme abgelegt sind, kann somit sehr selektiv ein Zugriff durch Programmteile eines Fremdprogrammes geregelt werden. Ein Zugriff kann somit verweigert oder erteilt werden. Der Zugriff selbst kann eine Leseberechtigung oder eine Schreibberechtigung beinhalten, sofern es sich um Daten handelt, auf die das Fremdprogramm zurückgreift. Versucht ein Fremdprogramm Code aus einem anderen Fremdprogramm aufzurufen, so kann auch hier eine Rechteregelung existieren.

Vorteilhafterweise sind die die Zugriffsrechte beinhaltenden Bitfolgen zusammen mit den Adressen oder Adressblöcken und den Kennzeichnern (Programm-ID) in einer im Speicher abgelegten Tabelle gespeichert. Ein Adressblock kann dabei durch seinen Adressbeginn oder sein Adressende und die Adressblocklänge gekennzeichnet sein. Alternativ ist es denkbar, einen Adressblock durch eine untere und obere Adresse zu kennzeichnen. Jedem Adressblock kann dann die Zugriffsrechte beinhaltende Bitfolge zugeordnet werden. Sofern ein Adressblock nur eine einzelne Adresse beinhaltet, kann jedem einzelnen Befehl oder jeder einzelnen Adresse eine Zugriffsrechte beinhaltende Bitfolge zugeordnet werden.

Alternativ ist jeder Adressraum oder jede Adresse mit der die Zugriffsrechte beinhaltenden Bitfolge versehen. Dies bedeutet, eine Verlängerung der bisher verwendeten Wortzeile um die Länge der die Zugriffsrechte beinhaltenden Bitfolge. Hierdurch wird automatisch jeder Adresse, also jedem Wort ein Zugriffsrecht zugewiesen. Der Kennzeichner jeder Adresse oder jedes Adressraumes kann dabei beispielsweise in wenigstens einer höchstwertigen Stelle jeder Adresse bzw. jeder Adresse eines Adressraumes enthalten sein.

In einer vorteilhaften Ausgestaltung regelt ein drittes (Daten-)Zugriffsrecht in der Bitfolge Zugriffe innerhalb eines Speicherbereiches, also innerhalb eines einzigen Programmes. Dies ist gekoppelt mit dem zweiten Zugriffsrecht des eigenen Programmes. Insbesondere ist es dann möglich, sensitive Daten, zum Beispiel Initialisierungsdaten oder -variablen, vor einem Lese- oder Schreibzugriff bestimmter Programmteile innerhalb des eigenen Programmes zu schützen, wenn das zweite Zugriffsrecht des ausführenden Codes im eigenen Programm nicht gesetzt ist. Andere Datenbereiche, die lediglich diejenigen Daten, die während der Ausführung entstehen, beinhalten, könnten jedoch beispielsweise von allen Programmteilen beschrieben oder gelesen werden.

In einer weiteren vorteilhaften Ausgestaltung ist ein Rechte-Zwischenspeicher vorgesehen, der weitere Zugriffsrechte zwischen zwei Speicherbereichen beinhaltet, wobei die Zugriffsrechte durch das Betriebssystem auslesbar oder schreibbar sind. Vorzugsweise beinhaltet der Rechte-Zwischenspeicher erlaubte Zuordnungen, das heißt erlaubte Zugriffe, zwischen jeweils zwei unterschiedlichen Speicherbereichen. Diese Ausgestaltung sieht die Einführung einer Zugriffstabelle vor, die beispielsweise in Form eines Caches (Zwischenspeicher) realisiert sein kann. Die Zuordnungen in der Tabelle sind entweder mittels der Kennzeichner (Programm-IDs) oder mittels einer Übersetzungstabelle, mit deren Hilfe die jeweiligen Kennzeichner ermittelbar sind, realisiert.

Eine Applikation A, die aus mehreren Programmteilen besteht, kann hierdurch einem Programmteil B mehr Zugriffsrechte einräumen als beispielsweise einem Programmteil C. Der Rechte-Zwischenspeicher bzw. die in dem Rechte-Zwischenspeicher abgelegte Tabelle enthält hierzu beispielsweise zwei Spalten und eine je nach Komplexität bzw. Anzahl der Programmteile entsprechende Anzahl an Zeilen. In einer Zeile ist in der ersten Spalte ein Kennzeichner für den Programmteil, auf den zugegriffen wird, und in der zweiten Spalte ein Kennzeichner für den Programmteil, dem der Zugriff gestattet werden soll, vorgesehen. In der einfachsten Realisierung sind diese Kennzeichner mit den Programm IDs identisch. Alternativ könnte jedoch auch eine Übersetzungstabelle vorgesehen sein, mit der die Programm-IDs aus anderen Tabelleneinträgen ermittelt werden könnten.

Eine in dem Rechte-Zwischenspeicher realisierte Zugriffstabelle kann unterschiedlich realisiert werden. Bei einer zweispaltigen Tabelle darf jede Kombination aus unterschiedlichen Programmteilen höchstens einmal auftreten. Alternativ kann die Tabelle aus einer der Anzahl der Programmteile entsprechenden Anzahl an Programmteilen bestehen. Erlaubte Zugriffe werden dann mittels zusätzlicher Spalten in der Tabelle hinterlegt.

In einer weiteren vorteilhaften Ausgestaltung ist ein ausschließlich vom Betriebssystem verwaltbarer Speicherbereich vorgesehen. Dieser vom Betriebssystem verwaltete Speicherbe reich, der als "Context Safe Area" bezeichnet wird, dient dazu, sensitive Daten zwischenzuspeichern, die von keinem anderen Fremdprogramm oder Programmteilen davon gelesen oder geschrieben werden dürfen. Der ausschließlich vom Betriebssystem verwaltete Speicherbereich stellt somit einen Stack dar, der insbesondere von demjenigen Code verwendet wird, dessen drittes Zugriffsrecht lediglich besonders ausgewählten Programmteilen zur Verfügung steht.

In einer weiteren Ausgestaltung kann jedem Speicherbereich ein Adreßbereich zum Zwischenspeichern von Daten zugeordnet sein, der nur von dem im jeweiligen Speicherbereich abgelegten Programm verwaltet werden kann. Auch dieser Zwischenspeicher (Stack) dient dazu, besonders sensitive Daten zwischenzeitlich zu speichern, die auf keinen Fall von anderen Fremdprogrammen gelesen werden dürfen.

Anhand des weiter unten beschriebenen Verfahrens wird die oben beschriebene Ausgestaltung der Mikroprozessorschaltung besser verständlich werden.

Das erfindungsgemäße Verfahren zum Organisieren des Zugriffs auf in einem Speicher abgelegten Daten oder Programme mit wenigstens einem Mikroprozessor, einem Speicher für ein Betriebssystem und wenigstens einem Speicher zur freien Programmierung mit individuellen Fremdprogrammen, wobei in dem Speicher zur freien Programmierung mehrere Speicherbereiche mit jeweiligen Adreßräumen vorgesehen sind, wobei jedem Adreßraum ein Kennzeichner (Programm-ID) und jedem Adressraum eines Speicherbereiches wenigstens eine Zugriffsrechte beinhaltende Bitfolge (ACR) zugeordnet ist, wobei die die Zugriffsrechte beinhaltende Bitfolge ein erstes und ein zweites Zugriffsrecht beinhaltet, wobei das erste Zugriffsrecht Zugriffe zwischen zwei Speicherbereichen (22, 23, 24) und das zweite Zugriffsrecht Zugriffe innerhalb eines Speicherbereiches (22, 23, 24) regelt und wobei in jedem Speicherbereich genau ein Fremdprogramm vorgesehen ist, umfasst die folgende Schritte:
a) Ermitteln einer ersten Programm-ID eines gerade ausgeführten Code-Befehls eines Fremdprogrammes anhand des Kennzeichners einer gerade aktuellen Adresse (PC),
b) Ermitteln einer zweiten Programm-ID eines adressierten Speicherbereichs,
c) Vergleich der ersten und der zweiten Programm-ID,
d1) Auswahl des ersten oder zweiten Zugriffsrechts abhängig vom Ergebnis des Vergleichs in Schritt c).

In einer Ausgestaltung des erfindungsgemäßen Verfahrens werden, wenn der Code-Befehl des Schrittes a) kein Sprungbefehl ist, die nachfolgenden Schritte ausgeführt:
e) Auswerten des ausgewählten Zugriffsrechts,
f1) Fortführen des Programmcodes des Fremdprogramms, wenn der Zugriff beziehungsweise Code-Befehl auf den adressierten Speicherbereich erlaubt ist,
f2) Aufruf einer Fehlerbehandlungsroutine, wenn der Zugriff beziehungsweise Code-Befehl auf den adressierten Speicherbereich nicht erlaubt ist.

Anhand des Kennzeichners (nachfolgend auch als Programm-ID bezeichnet), z.B. der höchstwertigen Stelle beziehungsweise Stellen kann somit ermittelt werden, ob ein Zugriff auf den gleichen oder auf einen anderen Speicherbereich und somit auf ein anderes Fremdprogramm erfolgt oder nicht. Abhängig von dieser Auswertung wird das erste oder zweite Zugriffsrecht ermittelt und ausgewertet. Aufgrund dieses Verfahrens ist es möglich, bestimmte Programmteile (Programmbibliotheken) für andere Fremdprogramme nutzbar zu machen.

In einer Ausgestaltung des erfindungsgemäßen Verfahrens wird bei gleicher erster und zweiter Programm-ID, abhängig vom Zugriffsrecht des gerade ausgeführten Code-Befehls, das zweite oder ein drittes Zugriffsrecht ausgewählt. Die einem Code-Befehl zugeordneten Zugriffsrechte geben an, ob dieser auch auf sensitive Bereiche des Programmcodes zugreifen darf. Ist dies der Fall, so wird das der Adresse zugeordnete ausgewählte dritte Zugriffsrecht weiter ausgewertet und festgelegt, ob ein Schreib- oder lediglich ein Lesezugriff erfolgen kann. Hierdurch ist ein Schutz gewährleistet, der eine Zerstörung der sensiblen Daten durch Programmbibliotheken des gerade ausgeführten Fremdprogramms verhindert.

In einer weiteren vorteilhaften Ausgestaltung des erfindungsgemäßen Verfahrens werden nach Schritt f2) die nachfolgenden Schritte ausgeführt:
g) Überprüfung eines Rechte-Zwischenspeichers auf einen Eintrag, der einen erlaubten Zugriff des Speicherbereiches mit der ersten Programm-ID (PID_{PC}) auf den durch die zweite Programm-ID (PID_{Adr}) gekennzeichneten Speicherbereich darstellt,
h) Fortführen des Programm-Codes des Fremdprogramms, wenn der Eintrag in dem Rechte-Zwischenspeicher vorhanden ist,
i) Aufruf einer Fehlerbehandlungsroutine, wenn der Eintrag nicht vorhanden ist.

Diese vorteilhafte Variante des erfindungsgemäßen Verfahrens ermöglicht es, mittels des Rechte-Zwischenspeichers beispielsweise einem Programmteil B mehr Zugriffsrechte einzuräumen als einem Programmteil C.

Wenn ein Programmteil A auf ein Programmteil B zugreift, werden zunächst das erste, zweite und dritte Zugriffsrecht überprüft. Ist der Zugriff erlaubt, so wird er gemäß den jeweiligen Rechten ausgeführt. Ist der Zugriff jedoch nicht erlaubt, so wird der Inhalt des Rechte-Zwischenspeichers daraufhin überprüft, ob es einen Eintrag für einen Zugriff des Programmteiles A auf den Programmteil B gibt. Im Falle eines derartigen vorhandenen Eintrages wird dem Programmteil A beispielsweise ein erweitertes Zugriffsrecht auf den Programmteil B eingeräumt. Im Falle, dass ein derartiger Eintrag nicht in dem Rechte-Zwischenspeicher vorhanden ist wird eine Fehlerbehandlungsroutine ausgelöst.

In einer vorteilhaften Ausgestaltung des erfindungsgemäßen Verfahrens werden, wenn der Code-Befehl des Schrittes a) ein Sprungbefehl ist, dann die nachfolgenden Schritte ausgeführt:
d2) Sprung zur aufgerufenen Adresse,
e1) Fortführen des Programmcodes des Fremdprogramms an dem adressierten Speicherbereich, wenn erste und zweite Programm-ID gleich sind,
e2) Auslesen von in dem adressierten Speicherbereich befindlichem Adressinhalt, wenn erste und zweite Programm-ID ungleich sind,
aa) Aufruf einer Fehlerbehandlungsroutine, wenn der ausgelesene Adressinhalt kein Einsprungbefehl ist,
bb) Fortführen des Programmcodes des Fremdprogramms, wenn der ausgelesene Adressinhalt ein Einsprungbefehl ist.

Durch dieses Vorgehen wird sichergestellt, dass Sprünge zwischen den Programmbibliotheken nur an vorher festgelegten Einsprungadressen, die mittels eines festgelegten Einsprungbefehls definiert sind, erfolgen dürfen. Somit ist ein unkontrollierter Einsprung an eine beliebige Stelle des Programmcodes unmöglich. Sowohl das Ausspionieren als auch das Zerstören von Daten wird somit unmöglich.

In einer weiteren Ausgestaltung des Verfahrens wird die Adresse, unter welcher der Sprungbefehl gespeichert ist, auf einem Zwischenspeicher abgespeichert.

Bei diesem Zwischenspeicher handelt es sich vorteilhafterweise um einen lediglich vom Betriebssystem verwalteten Speicher, dem eingangs genannten "Context Safe Area".

Vorteilhafterweise ist der Einsprungbefehl eine fest vorgegebene Bitfolge. Anhand dieser ist erkennbar, ob es sich um eine Einsprungadresse handelt oder nicht.

Weiterhin ist es zweckmäßig, wenn Code-Befehlen, denen ein erstes Ausführungsrecht zugeordnet ist, als Zwischenspeicher ein öffentlich zugänglicher Zwischenspeicher (Stack) zur Verfügung steht. Bei diesen Codebefehlen handelt es sich um Programm-code, welcher nicht auf die sensitiven Daten eines Programmes zugreift bzw. zugreifen kann.

Andererseits wird vorteilhafterweise von Code-Befehlen, denen ein zweites Ausführungsrecht zugeordnet ist, ein dem jeweiligen Speicherbereich zugeordneter Zwischenspeicher, der nur von dem im jeweiligen Speicherbereich abgelegten Programm verwaltet werden kann, verwendet. Dieser Zwischenspeicher, der als "Sensitive Stack" bezeichnet wird, dient zum Zwischenspeichern von Daten, die keinesfalls von anderen Programmbibliotheken oder Fremdprogrammen gelesen oder überschrieben werden dürfen.

Anhand der nachfolgenden Figuren wird die Erfindung und deren Vorteile weiter erläutert werden. Es zeigen:
- Figur 1: die Aufteilung des linearen Adreßraumes mit zwei Programmen A und B,
- Figur 2: ein erstes Ausführungsbeispiel einer Zugriffsrechte beinhaltenden Tabelle,
- Figur 3: ein zweites Ausführungsbeispiel einer Zugriffsrech- te beinhaltenden Tabelle,
- Figur 4: den prinzipiellen Aufbau eines Adreßbereiches, wo- bei jeder Adresse eine Zugriffsrechte beinhaltende Bitfolge zugeordnet ist,
- Figur 5: eine Tabelle mit möglichen Zugriffsrechten,
- Figur 6: das erfindungsgemäße Verfahren in Form eines Pro- grammablaufplanes und
- Figur 7: ein Ausführungsbeispiel der erfindungsgemäßen Mi- kroprozessorschaltung.

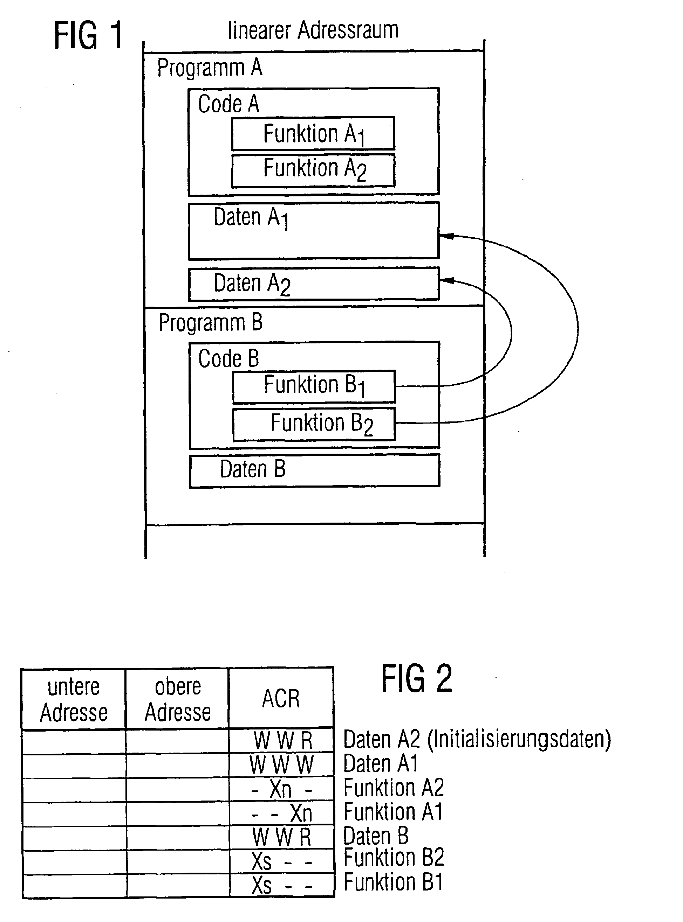

Figur 1 zeigt beispielhaft die der Erfindung zugrundeliegende Problematik. In einem linearen Adreßraum befinden sich zwei Programme A und B. Es wird davon ausgegangen, daß die zum Programm A gehörenden Programmteile beziehungsweise Programmbibliotheken mit den dazu gehörigen flüchtigen und fest vorgegebenen Daten derart beschaffen sind, daß sie sich durch gegenseitigen Aufruf und gegenseitige Verwaltung nicht selbst zerstören. In der vorliegenden Figur 1 beinhaltet das Programm A einen Bereich, der lediglich Befehls-Code beinhaltet und der mit Code A gekennzeichnet ist. Dieser kann mehrere voneinander unabhängige Funktionen A1, A2 beinhalten. Diese können sich gegenseitig aufrufen. Weiterhin beinhaltet das Programm A beispielhaft zwei Datenbereiche A1, A2, die flüchtige oder permanente Daten beinhalten können. Sämtliche in dem Programm A befindliche Daten können von dem Befehlscode beziehungsweise den Funktionen vollständig verwaltet und kontrolliert werden.

In entsprechender Weise ist das Programm B aufgebaut, wobei in der vorliegenden Figur 1 beispielhaft lediglich ein Datenbereich B dargestellt ist. Auch die im Programm B befindlichen Funktionen können sich gegenseitig aufrufen und die in dem Datenbereich B abgelegten Daten verwalten und kontrollieren.

Gemäß der Erfindung befinden sich das Programm A und das Programm B in einem jeweils vorgegebenen Speicherbereich, der sich entweder durch die höchstwertige Stelle beziehungsweise Stellen oder durch die jeweils zugeordnete Programm-ID (PID) unterscheidet. Innerhalb dieses Speicherbereiches ist es selbstverständlich nicht notwendig, daß der Befehlscode sowie die Daten blockweise in der in der Figur gezeigten Art und Weise angeordnet sind.

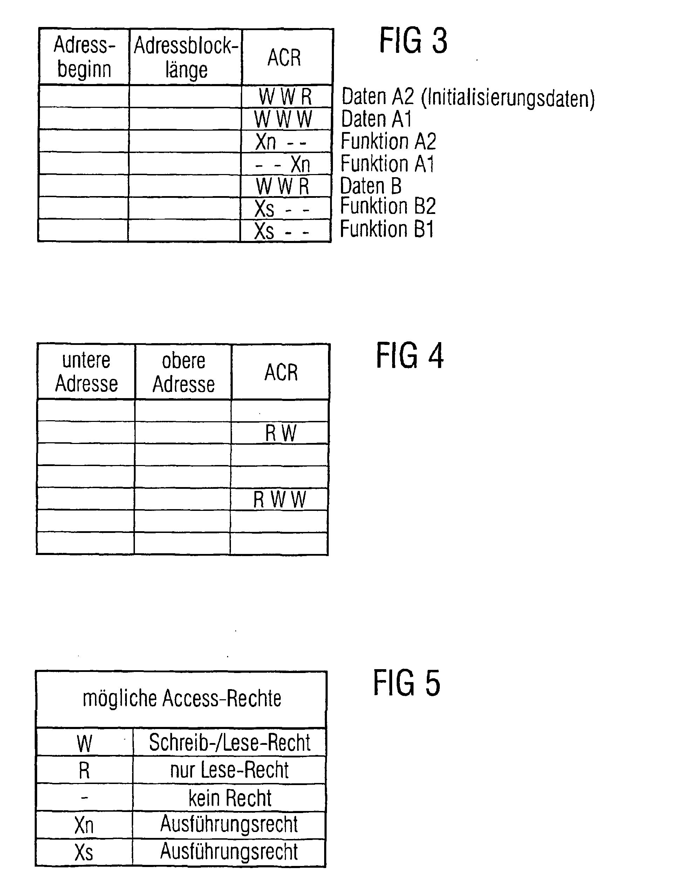

Die Erfindung eröffnet nun eine Möglichkeit, wie eine Funktion des Programmes B auf Daten des Programmes A zugreifen kann. Beispielhaft sind in der Figur 1 zwei derartige Zugriffe dargestellt. Die Funktion B1 greift auf den Daten-Bereich A2 zu, während die Funktion B2 auf den Datenbereich A1 zugreift. Das Programm A, das die Daten dem Programm B zur Verfügung stellt, kann gemäß der Erfindung selektiv für bestimmte Datenbereiche anderen Programmen bestimmte Zugriffsrechte erlauben. Mögliche Zugriffsrechte sind in der Figur 5 dargestellt. Denkbar sind Schreib-Lese-Rechte (W), lediglich ein Lese-Recht (R) sowie kein Datenzugriffsrecht, das heißt weder Lese- noch Schreib-Recht (-). Diese Rechte sind Daten zugeordnet. Die sogenannten Ausführungsrechte xₙ sowie xₛ sind dem Befehls-Code zugeordnet und beinhalten eine Information, ob mit dem gerade ausgeführten Befehl auf den gewünschten Datenbereich zugegriffen werden darf oder nicht.

Ein Datenzugriff eines Programmes B auf ein Programm A kann die Hardware durch den Vergleich der Programm-ID (z.B. der höchstwertigen Stelle beziehungsweise Stellen) des gerade ausgeführten Code-Befehls und der Adresse, auf die zugegriffen wird, überprüft werden.

Abhängig vom Vergleich der Programm-IDs kann festgestellt werden, ob ein Datenzugriff von einer Funktion innerhalb des gerade ausgeführten Programmes erfolgt oder von einer Funktion eines anderen Programmes. Erfindungsgemäß ist nunmehr jedem Datenbereich (sowohl Code-Befehlen als auch Daten) eine Zugriffsrechte beinhaltende Bitfolge zugeordnet.

Diese Bitfolge kann Teil der Wortzeile sein, wie das in Figur 4 dargestellt ist. Zusätzlich zu der Adresse und dem darin befindlichen Wert ist eine derartige Wortzeile um die Bitfolge der Zugriffsrechte (ACR) verlängert. Alternativ kann in dem Speicher eine Tabelle vorgesehen sein, die einen Speicherbereich definiert und ein diesem Speicherbereich zugeordnete Bitfolge mit den Zugriffsrechten beinhaltet. Der Adreßbereich kann dabei vorzugsweise durch seine untere und obere Adresse definiert sein (Figur 2) oder alternativ durch seinen Adreß-Beginn und die Adreßblock-Länge (Figur 3).

Die die Zugriffsrechte beinhaltende Bitfolge umfaßt wenigstens zwei Zugriffsrechte: das erste Zugriffsrecht, welches Zugriffe zwischen zwei Programmen regelt und das zweite Zugriffsrecht, das Zugriffe innerhalb eines Programmes regelt. Die Reihenfolge, in der die Zugriffsrechte innerhalb der Bitfolge (ACR) angeordnet sind, kann beliebig gewählt sein. Vorteilhafterweise weist die die Zugriffsrechte beinhaltende Bitfolge ein weiteres, drittes Zugriffsrecht auf, das Zugriffe innerhalb eines Programmes regelt. Im Unterschied zu dem zweiten Zugriffsrecht werden hiermit Adreßbereiche gekennzeichnet, die sensitive Daten, zum Beispiel Initialisierungsdaten, beinhalten. Damit ein Code-Befehl derartige Daten lesen oder beschreiben darf, benötigt auch der jeweilige Code-Befehl eine besondere Kennzeichnung.

Die die Zugriffsrechte beinhaltende Bitfolge der Figur 2 weist das erste, das zweite und das dritte Zugriffsrecht auf, wobei diese in der genannten Reihenfolge von rechts nach links in der Spalte ACR eingetragen sind. Der Datenbereich A2, der beispielsweise die Initialisierungsdaten beinhaltet, darf somit von Funktionen eines Fremdprogrammes gelesen werden (erstes Zugriffsrecht: R), während Funktionen innerhalb des gerade aktuellen Programmes sogar ein Schreibrecht genießen. Das gilt sowohl für solche Codebefehle, die mit einem normalen, ersten Ausführungsrecht (xₙ) gekennzeichnet sind als auch für solche, die die Berechtigung zum Ausführen sensibler Daten (xₛ) innehaben (zweites Ausführungsrecht).

Der Tabelle in Figur 2 kann weiterhin entnommen werden, daß der Datenbereich A1 sowohl von Funktionen innerhalb als auch außerhalb des gerade ausgeführten Programmes A beschrieben werden darf (erstes, zweites und drittes Zugriffsrecht: W).

Mittels der den einzelnen Daten-Bereichen des linearen Adreßraums zugeordneten Zugriffsrechten können somit auf einfache Weise Daten beziehungsweise Funktionen anderen Programmen zugänglich gemacht werden. Sofern der von dem Fremdprogramm gewünschte Zugriff nicht erlaubt ist, was anhand der Zugriffsrechte festgestellt werden kann, so wird eine Fehlerbehandlungsroutine ausgelöst. Der Programmierer selbst kann auf diese Weise Code-Befehle und ausgewählte Daten eines Programmes vor dem Schreibzugriff aus anderen Programmen schützen.

Ein weiterer erfindungsgemäßer Schutzmechanismus betrifft die Kontrolle von Funktionsaufrufen aus Fremdprogrammen. Um einen unkontrollierten Programmfluß in einem Programm und damit eine mögliche Zerstörung durch Überschreiben eigener Daten zu verhindern, darf eine Funktion innerhalb eines Programmes von anderen Programmen nur an definierten Einsprungadressen angesprungen werden. Diese Einsprungadressen sind durch vorgegebene Bitfolgen gekennzeichnet. Bei einem Sprung-Befehl wird die angegebene Adresse auf die erwartete Bitfolge hin überprüft. Ist diese nicht vorhanden, so wird eine Fehlerbehandlungsroutine ausgelöst. Wird die erwartete Bitfolge angetroffen, so kann die aufgerufene Funktion ausgeführt werden.

Da Funktionen innerhalb eines Programmes von jeder Stelle aus aufgerufen werden können, muß bei jedem Funktionsaufruf die Rücksprungadresse gespeichert werden. Wenn bei der Abarbeitung der Code-Befehle einer Funktion eine Rücksprung-Instruktion angetroffen wird, wird der Programmzähler auf die zuvor gespeicherte Rücksprung-Adresse gesetzt. Durch eine Manipulation der Rücksprung-Adresse könnte der Programmfluß innerhalb eines Programmes in unerwünschter Weise verändert werden.

Zur Lösung dieses Problemes schlägt die Erfindung vor, die Rücksprungadressen vor Schreibzugriffen von anderen Programmen zu schützen, indem die Rücksprungadressen bei einem Funktionsaufruf automatisch auf einem Zwischenspeicher gespeichert werden, auf den nur das Betriebssystem zugreifen kann. Dabei ist es ausreichend, lediglich diejenigen Rücksprungadressen auf einem schreibgeschützten Zwischenspeicher abzulegen, bei denen der Funktionsaufruf aus einem anderen Programm erfolgt ist. Bei Funktionsaufrufen einer Funktion innerhalb desselben Programmes kann hingegen ein allgemein zugänglicher Zwischenspeicher verwendet werden. Dabei muß jedoch sichergestellt sein, daß diese Rücksprungadressen nicht aus dem aktuellen Programm herausführen. Als weitere Alternative kann die Rücksprungadresse beim Funktionsaufruf automatisch in ein Zwischenregister gespeichert werden, wobei ein alter Wert des Zwischenregisters auf dem separaten Stack mit den Rücksprungadressen abgelegt wird. Der Zugriff auf das Zwischenregister muß dann für das aufgerufene Programm genauso restriktiv sein, wie der auf den vom Betriebssystem verwalteten Zwischenspeicher.

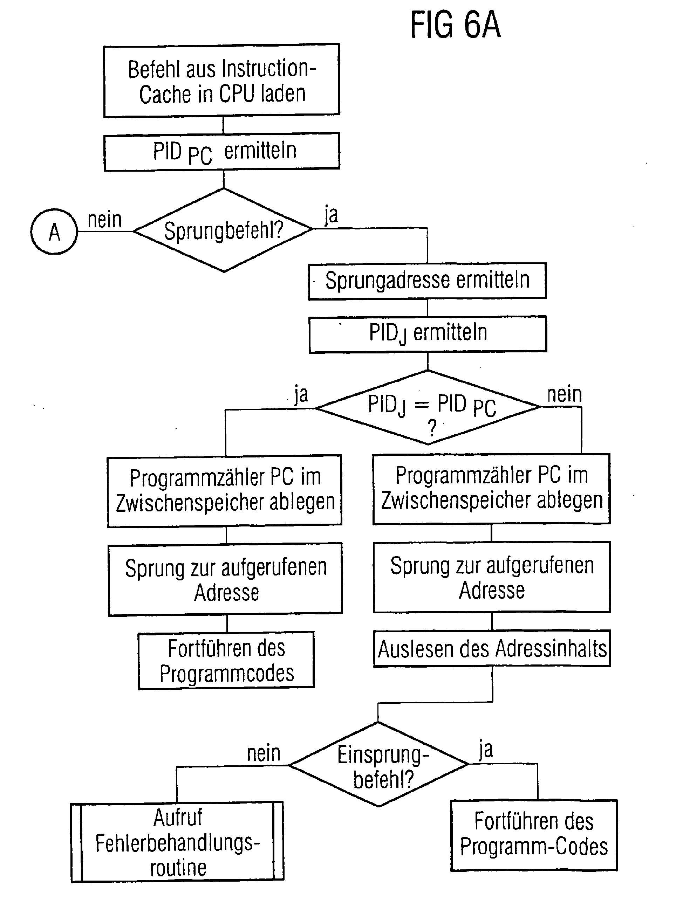

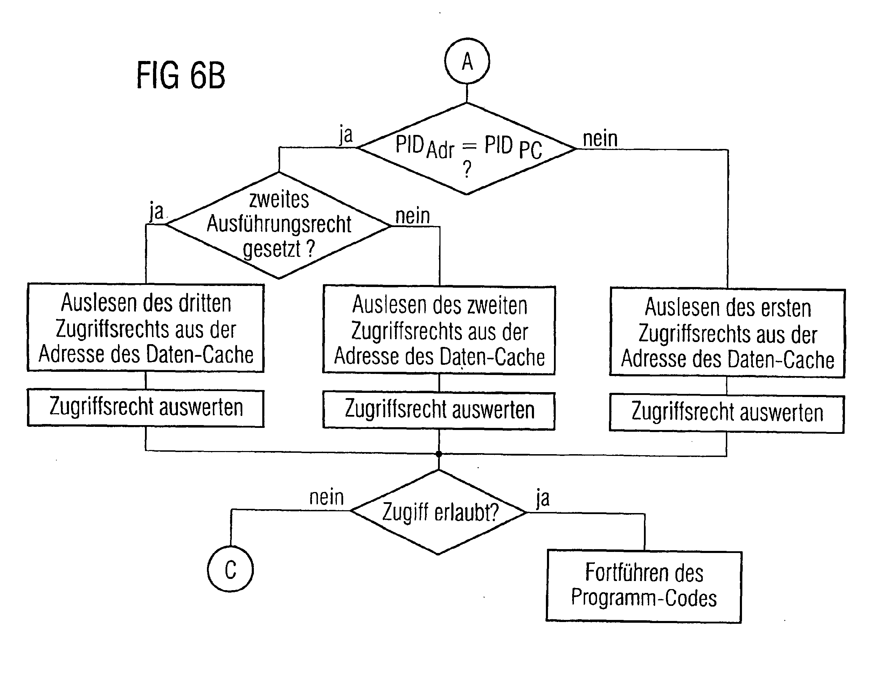

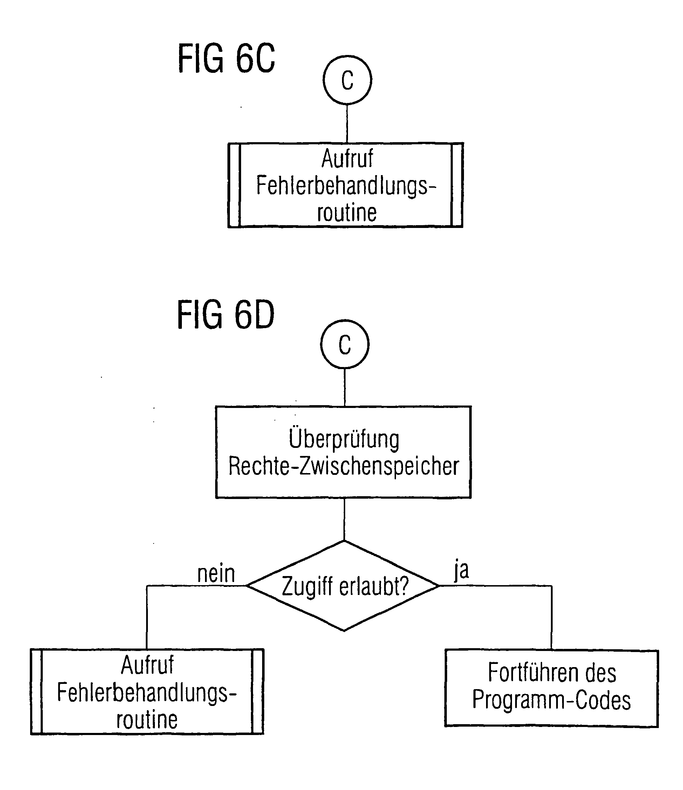

Das erfindungsgemäße Verfahren wird anhand der Figur 6 nochmals verdeutlicht. Ein Befehl aus dem Instruktions-Cache wird in die CPU geladen und die Programm-Id (PID_{PC}) in einem internen CPU-Register vorgehalten. Im nächsten Schritt wird überprüft, ob es sich bei dem Code-Befehl um einen Sprungbefehl handelt. Sofern dies der Fall ist, wird die Programm-ID der aufgerufenen Adresse (PID_{J}) ermittelt. Bei einer Übereinstimmung der beiden Programm-IDs findet ein Sprung zur aufgerufenen Adresse statt und das Programm wird fortgeführt. Gleiche Programm-IDs bedeuten, daß ein Sprung innerhalb des gerade aktiven Programms ausgeführt wird. Bei unterschiedlichen Programm-IDs wird die aufgerufene Adresse angesprungen und der darin befindliche Adreßinhalt ausgelesen. Handelt es sich bei diesem Adreßinhalt um den erwarteten Einsprungbefehl, also um eine fest vorgegebene Bitfolge, so wird der Programmcode fortgeführt. Im anderen Fall wird eine Fehlerbehandlungsroutine aufgerufen.

Handelt es sich bei dem Code-Befehl um keinen Sprungbefehl, sondern um einen Befehl mit einem Datenzugriff, so wird die Programm-ID der aufgerufenen Adresse aus dem Daten-Cache in die CPU geladen und ermittelt. Stimmen die Programm-IDs PID_{PC} und PID_{ADR} nicht überein, so handelt es sich um einen versuchten Datenzugriff eines Fremdprogrammes. Somit wird das erste Zugriffsbit entweder aus der Adresse des Daten-Caches oder aus einer zugeordneten Tabelle ermittelt und ausgewertet. Ist der Zugriff erlaubt, zum Beispiel der Versuch ein Datum auszulesen, wobei das erste Zugriffsrecht R oder W darstellt, so wird der Programmcode fortgesetzt. Sofern das erste Zugriffsbit in dem genannten Beispiel weder eine Lese- noch eine Schreibberechtigung erteilt, wird eine Fehlerbehandlungsroutine aufgerufen.

Statt dem Aufruf der Fehlerbehandlungsroutine kann sich an dieser Stelle eine weitere Rechte-Überprüfung anschließen. In einer in einem Rechte-Zwischenspeicher gespeicherten Tabelle werden Einträge daraufhin überprüft, ob ein Rechtepaar aus aufgerufenem und aufrufenden Programmteil vorhanden ist. Sofern dies der Fall ist, wird dem Programmteil mit der Programm-ID PID_{PC} beispielsweise ein erweiterter Zugriff auf den Programmteil mit der Programm-ID PID_{Adr} eingeräumt. Es ist somit möglich, einem Programmteil mehr Zugriffsrechte einzuräumen als einem an sich gleichberechtigten anderen Programmteil. Für sensitive Zugriffsrechte (drittes Zugriffsbit) besteht die oben beschriebene Unterscheidung bezüglich der Rechte jedoch weiterhin. Läßt sich in dem Rechte-Zwischenspeicher jedoch kein Eintrag mit den Programm-IDs PID_{PC} und PID_{Adr} finden, so wird eine Fehlerbehandlungsroutine ausgelöst.

Die eingangs beschriebene Rechte-Überprüfung kann auch parallel zu der hier beschriebenen erweiterten Rechte-Überprüfung stattfinden. Der Zugriff auf den aufgerufenen Programmteil ist dann erlaubt, wenn die normale oder die erweiterte Rechte-Überprüfung positiv ausgefallen ist. Fallen beide Rechte-Überprüfungen negativ aus, wird eine Fehlerbehandlungsroutine ausgelöst.

Bei übereinstimmenden Programm-IDs PID_{PC} und PID_{ADR} handelt es sich um einen Zugriff innerhalb des gerade aktiven Programmes. Sofern der Code-Befehl mit einem Ausführungsrecht, welcher lediglich Zugriffe auf normale Daten erlaubt, versehen ist, wird das zweite Zugriffsbit an der Adresse aus dem Datencache ausgelesen und ausgewertet. Besitzt der Code-Befehl das Recht, auch sensitive Daten zu bearbeiten, was durch das zweite Ausführungsrecht (xₛ) gekennzeichnet ist, so wird das dritte Zugriffsrecht aus der die Zugriffsrechte beinhaltenden Bitfolge ausgelesen und ausgewertet. Bei einem erlaubten Zugriff wird in beiden genannten Fällen der Programmcode fortgeführt. Im anderen Fall findet der Aufruf einer Fehlerbehandlungsroutine statt.

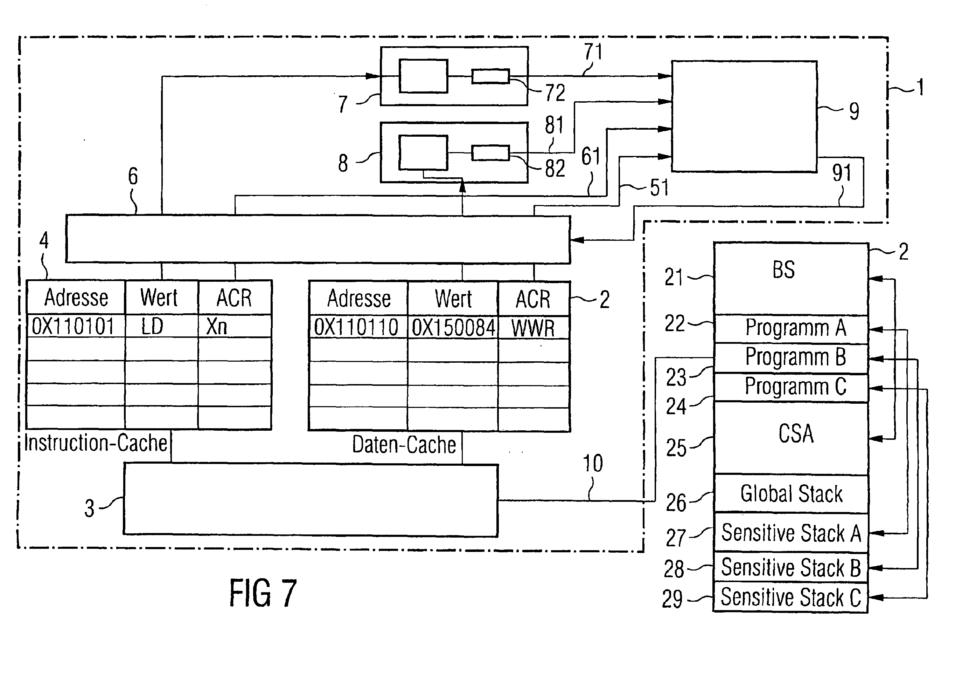

Figur 7 zeigt beispielhaft den schematischen Aufbau der erfindungsgemäßen Mikroprozessorschaltung. Ein Mikroprozessor 1 enthält eine Steuereinheit 3, die über eine Steuerleitung 10 mit einer Speicheranordnung 2 verbunden ist. Der Speicher beinhaltet einen Bereich 2 1, der für das Betriebssystem vorgesehen ist, beispielhaft drei Speicherbereiche 22, 23, 24 für jeweilige Fremdprogramme, einen ausschließlich durch das Betriebssystem verwaltbaren Zwischenspeicher 25, einen für alle Programme verwendbaren Zwischenspeicher 26 sowie Zwischenspeicher 27, 28, 29 (sog. "Sensitive Stacks"), die jeweils einen der Speicherbereiche 22, 23, 24 zugeordnet sind und nur durch diese verwaltbar sind. Der Mikroprozessor weist weiter eine Central processing unit (CPU) 6, einen Instruktions-Cache 4, einen Daten-Cache 5 sowie Recheneinheiten 7, 8 mit jeweils einem Hilfsregister 72, 83 auf. Weiterhin ist eine Auswerteeinheit 9 vorhanden, die mit den Recheneinheiten 7, 8 und der arithmetisch-logischen Recheneinheit 6 gekoppelt ist.

Mittels der Recheneinheit 7 wird die Programm-ID der Adresse des gerade ausgeführten Code-Befehls ermittelt und in einem Hilfsregister 72 abgespeichert. Hierzu wird die Adresse aus dem Instruktions-Cache 4 über die arithmetisch-logische Recheneinheit der Recheneinheit 7 zugeführt. In entsprechender Weise wird die Programm-ID der aufzurufenden Adresse durch die Recheneinheit 8 ermittelt und in einem Hilfsregister 82 abgelegt. Die aufzurufende Adresse wird der Recheneinheit 8 durch die arithmetisch-logische Einheit 6 aus dem Daten-Cache zugeführt. Die Inhalte der Hilfsregister 72, 82 werden der Auswerteeinheit 9 zugeführt und dort miteinander verglichen. Hierdurch wird die Aussage darüber gewonnen, ob ein Zugriff zwischen zwei Programmen oder innerhalb eines Programmes erfolgen soll. Der Auswerteeinheit 9 werden schließlich noch die Zugriffsrechte des Code-Befehls sowie der aufzurufenden Adresse zugeführt. Anhand dieser Informationen ist die Auswerteeinheit 9 in der Lage, den in Figur 6 beschriebenen Programmablauf durchzuführen und zu entscheiden, ob ein Zugriff erlaubt oder verweigert werden soll. Dieses Ergebnis wird dem der CPU zugeführt.

### Bezugszeichenliste

- 1: Mikroprozessor
- 2: Speicher
- 3: Steuereinheit
- 4: Instruktions-Cache
- 5: Daten-Cache
- 6: CPU
- 7: Recheneinheit
- 8: Recheneinheit
- 9: Auswerteeinheit
- 10: Steuerleitung
- 21: Speicherbereich
- 22: Speicherbereich
- 23: Speicherbereich
- 24: Speicherbereich
- 25: Zwischenspeicher
- 26: Zwischenspeicher
- 27: Zwischenspeicher
- 28: Zwischenspeicher
- 29: Zwischenspeicher
- ACR: Zugriffsrechte beinhaltende Bitfolge
- 72: erstes Hilfsregister
- 82: zweites Hilfsregister

## Patentansprüche

1. Mikroprozessorschaltung zum Organisieren des Zugriffs auf in einem Speicher (2) abgelegte Daten oder Programme mit wenigstens einem Mikroprozessor (1), einem Speicher (21) für ein Betriebssystem und wenigstens einem Speicher (22, 23, 24) zur freien Programmierung mit individuellen Fremdprogrammen, wobei in dem Speicher (22, 23, 24) zur freien Programmierung mehrere Speicherbereiche mit jeweiligen Adressräumen vorgesehen sind, wobei jedem Adressraum ein Kennzeichner (Programm-ID) zugeordnet ist und mit Mitteln (7, 8), die den jeweils einem Speicherbereich zugeordneten Kennzeichner (Programm-ID) jeweils bei Speicherzugriffen vor der Adressierung des Speicherbereiches in ein erstes Hilfsregister (72) laden und die den Kennzeichner (Programm-ID) des adressierten Speicherbereiches in ein zweites Hilfsregister (82) laden und die einen Vergleich des ersten und zweiten Hilfsregisters (72, 82) vornehmen,
**dadurch gekennzeichnet, dass**
jedem Adressraum eines Speicherbereiches wenigstens eine Zugriffsrechte beinhaltende Bitfolge (ACR) zugeordnet ist und die die Zugriffsrechte beinhaltende Bitfolge ein erstes und ein zweites Zugriffsrecht beinhaltet, wobei das erste Zugriffsrecht Zugriffe zwischen zwei Speicherbereichen (22, 23, 24) und das zweite Zugriffsrecht Zugriffe innerhalb eines Speicherbereiches (22, 23, 24) regelt.

2. Mikroprozessorschaltung nach Anspruch 1,
**dadurch gekennzeichnet, dass**
jeder Adresse eines Adressraumes eine Zugriffsrechte beinhaltende Bitfolge (ACR) zugeordnet ist.

3. Mikroprozessorschaltung nach Anspruch 1 oder 2,
**dadurch gekennzeichnet, dass**
die die Zugriffsrechte beinhaltenden Bitfolgen (ACR) zusammen mit den Adressen oder Adressblöcken und den Kennzeichnern (Programm-ID) in einer im Speicher abgelegten Tabelle gespeichert sind.

4. Mikroprozessorschaltung nach Anspruch 3,
**dadurch gekennzeichnet, dass**
ein Adressblock durch seinen Adressbeginn oder Adressende und die Adressblocklänge **gekennzeichnet** ist.

5. Mikroprozessorschaltung nach Anspruch 3,
**dadurch gekennzeichnet, dass**
ein Adressblock durch eine untere und obere Adresse **gekennzeichnet** ist.

6. Mikroprozessorschaltung nach Anspruch 1 oder 2,
**dadurch gekennzeichnet, dass**
jeder Adressraum oder jede Adresse mit der die Zugriffsrechte beinhaltenden Bitfolge (ACR) versehen ist.

7. Mikroprozessorschaltung nach einem der Ansprüche 1 bis 6,
**dadurch gekennzeichnet, dass**
ein drittes Zugriffsrecht in der Bitfolge vorgesehen ist, das Zugriffe innerhalb eines Speicherbereiches (22, 23, 24) regelt.

8. Mikroprozessorschaltung nach einem der Ansprüche 1 bis 7,
**dadurch gekennzeichnet, dass**
ein Rechte-Zwischenspeicher vorgesehen ist, der weitere Zugriffsrechte zwischen zwei Speicherbereichen beinhaltet, wobei die Zugriffsrechte durch das Betriebssystem auslesbar oder schreibbar sind.

9. Mikroprozessorschaltung nach Anspruch 8,
**dadurch gekennzeichnet , dass**
der Rechte-Zwischenspeicher erlaubte Zuordnungen (Zugriffe) zwischen jeweils zwei Speicherbereichen beinhaltet.

10. Mikroprozessorschaltung nach Anspruch 8 oder 9,
**dadurch gekennzeichnet, dass**
die Zuordnungen in der Tabelle mittels den Kennzeichnern (Programm-IDs) oder mittels einer Übersetzungstabelle, mit deren Hilfe die jeweiligen Kennzeichner ermittelbar sind, realisiert sind.

11. Mikroprozessorschaltung nach einem der Ansprüche 1 bis 10,
**dadurch gekennzeichnet, dass**
ein ausschließlich vom Betriebssystem verwalteter Speicherbereich (25) vorgesehen ist.

12. Mikroprozessorschaltung nach einem der Ansprüche 1 bis 11,
**dadurch gekennzeichnet, dass**
jedem Speicherbereich (22, 23, 24) ein Adressbereich (27, 28, 29) zum Zwischenspeichern von Daten zugeordnet ist, der nur von dem im jeweiligen Speicherbereich (22, 23, 24) abgelegten Programm verwaltet werden kann.

13. Verfahren zum Organisieren des Zugriffs auf in einem Speicher (2) abgelegte Daten oder Programme mit wenigstens einem Mikroprozessor (1), einem Speicher (21) für ein Betriebssystem und wenigstens einem Speicher (22, 23, 24) zur freien Programmierung mit individuellen Fremdprogrammen, wobei in dem Speicher (22, 23, 24) zur freien Programmierung mehrere Speicherbereiche mit jeweiligen Adressräumen vorgesehen sind, wobei jedem Adressraum ein Kennzeichner (Programm-ID) und jedem Adressraum eines Speicherbereiches wenigstens eine Zugriffsrechte beinhaltende Bitfolge (ACR) zugeordnet ist, wobei die die Zugriffsrechte beinhaltende Bitfolge ein erstes und ein zweites Zugriffsrecht beinhaltet, wobei das erste Zugriffsrecht Zugriffe zwischen zwei Speicherbereichen (22, 23, 24) und das zweite Zugriffsrecht Zugriffe innerhalb eines Speicherbereiches (22, 23, 24) regelt und wobei in jedem Speicherbereich (22, 23, 24) genau ein Fremdprogramm vorgesehen ist, mit den Schritten:
a) Ermitteln einer ersten Programm-ID (PID _{PC}) eines gerade ausgeführten Code-Befehls eines Fremdprogrammes anhand des Kennzeichners einer gerade aktuellen Adresse,
b) Ermitteln einer zweiten Programm-ID (PID _{Adr}) eines adressierten Speicherbereiches,
c) Vergleich der ersten und der zweiten Programm-ID,
d1) Auswahl des ersten oder zweiten Zugriffsrechts (ACR) abhängig vom Ergebnis des Vergleichs in Schritt c).

14. Verfahren nach Anspruch 13,
**dadurch gekennzeichnet, dass**, wenn der Code-Befehl des Schrittes a) kein Sprungbefehl ist, die nachfolgenden Schritte ausgeführt werden:
e) Auswerten des ausgewählten Zugriffsrechts,
f1) Fortführen des Programmcodes des Fremdprogramms, wenn der Zugriff beziehungsweise Code-Befehl auf den adressierten Speicherbereich erlaubt ist,
f2) Aufruf einer Fehlerbehandlungsroutine, wenn der Zugriff beziehungsweise Code-Befehl auf den adressierten Speicherbereich nicht erlaubt ist.

15. Verfahren nach Anspruch 13 oder 14,
**dadurch gekennzeichnet, dass**
bei gleicher erster und zweiter Programm-ID abhängig vom Zugriffsrecht des gerade ausgeführten Code-Befehls das zweite Zugriffsrecht oder ein drittes Zugriffsrecht ausgewählt wird.

16. Verfahren nach einem der Ansprüche 14 bis 15,
**dadurch gekennzeichnet, dass**
nach Schritt f2) die nachfolgenden Schritte ausgeführt werden:
g) Überprüfung eines Rechte-Zwischenspeichers auf einen Eintrag, der einen erlaubten Zugriff des Speicherbereiches mit der ersten Programm-ID (PID_{PC}) auf den durch die zweite Programm-ID (PID_{Adr}) gekennzeichneten Speicherbereich darstellt,
h1) Fortführen des Programm-Codes des Fremdprogramms, wenn der Eintrag in dem Rechte-Zwischenspeicher vorhanden ist,
h2) Aufruf einer Fehlerbehandlungsroutine, wenn der Eintrag nicht vorhanden ist.

17. Verfahren nach Anspruch 13,
**dadurch gekennzeichnet, dass**, wenn der Code-Befehl des Schrittes a) ein Sprungbefehl ist, die nachfolgenden Schritte ausgeführt werden:
d2) Sprung zur aufgerufenen Adresse,
e1) Fortführen des Programmcodes des Fremdprogramms an dem adressierten Speicherbereich, wenn die erste und zweite Programm-ID gleich sind, e2) Auslesen von in dem adressierten Speicherbereich befindlichem Adressinhalt, wenn die erste und zweite Programm-ID ungleich sind,
aa) Aufruf einer Fehlerbehandlungsroutine, wenn der ausgelesene Adressinhalt kein Einsprungbefehl ist,
bb) Fortführen des Programmcodes des Fremdprogramms, wenn der ausgelesene Adressinhalt ein Einsprungbefehl ist.

18. Verfahren nach Anspruch 17,
**dadurch gekennzeichnet, dass**
vor Schritt d2) der Schritt des Abspeicherns der Adresse des gerade ausgeführten Sprungbefehls auf einem Zwischenspeicher (25...29) ausgeführt wird.

19. Verfahren nach Anspruch 17 oder 18,
**dadurch gekennzeichnet, dass**
der Einsprungbefehl eine fest vorgegebene Bitfolge ist.

20. Verfahren nach Anspruch 18,
**dadurch gekennzeichnet, dass**
der Zwischenspeicher (25) ausschließlich vom Betriebssystem verwaltet wird.

21. Verfahren nach einem der Ansprüche 13 bis 20,
**dadurch gekennzeichnet, dass** Code-Befehle, denen ein erstes Ausführungsrecht zugeordnet ist, als Zwischenspeicher einen öffentlich zugänglichen Zwischenspeicher (26) verwenden.

22. Verfahren nach einem der Ansprüche 13 bis 21,
**dadurch gekennzeichnet, dass**
Code-Befehle, denen ein zweites Ausführungsrecht zugeordnet ist, einen dem Speicherbereich zugeordneten Zwischenspeicher (27, 28, 29), der nur von dem im jeweiligen Speicherbereich abgelegten Programm und dem Betriebssystem verwaltet werden kann, verwenden.

## Claims

1. A microprocessor circuit for organizing access to data or programs filed in a memory (2) comprising at least one microprocessor (1), one memory (21) for an operating system and at least one memory (22, 23, 24) for free programming using individual external programs, wherein a plurality of memory areas having respective address spaces are provided in the memory (22, 23, 24) for free programming, wherein an identifier (program ID) is assigned to each address space, and comprising means (7, 8) loading the identifier (program ID) respectively assigned to a memory area into a first auxiliary register (72) in each case in an event of a memory access prior to the addressing of the memory area and loading the identifier (program ID) of the addressed memory area into a second auxiliary register (82), and performing a comparison of the first and the second auxiliary register (72, 82),
**characterized in that**
at least one bit sequence (ACR) including access rights is assigned to each address space of a memory area and the bit sequence including access rights includes a first and a second access right, wherein the first access right regulates accesses between two memory areas (22, 23, 24) and the second access right regulates accesses within one memory area (22, 23, 24).

2. The microprocessor circuit according to claim 1,
**characterized in that**
a bit sequence (ACR) including access rights is assigned to each address of an address space.

3. The microprocessor circuit according to claim 1 or 2,
**characterized in that**
the bit sequences (ACR) including the access rights are stored together with the addresses or address blocks and the identifiers (program ID) in a table stored in the memory.

4. The microprocessor circuit according to claim 3,
**characterized in that**
an address block is identified by its address beginning or address ending and an address block length.

5. The microprocessor circuit according to claim 3,
**characterized in that**
an address block is identified by a lower and an upper address.

6. The microprocessor circuit according to claim 1 or 2,
**characterized in that**
each address space or each address is provided with the bit sequence (ACR) including the access rights.

7. The microprocessor circuit according to anyone of the claims 1 to 6,
**characterized in that**
a third access right is provided in the bit sequence, the third access right regulating accesses within a memory area (22, 23, 24).

8. The microprocessor circuit according to anyone of the claims 1 to 7,
**characterized in that**
a rights buffer defining further access rights between two of the memory areas is provided, wherein the access rights can be read out or written by the operating system.

9. The microprocessor circuit according to claim 8,
**characterized in that**
the rights buffer stores allowed assignments (accesses) between two of the memory areas in each case.

10. The microprocessor circuit according to claim 8 or 9,
**characterized in that**
the assignments in the table are realized by the identifiers (program IDs) or by a translation table, used to determine the identifier in each case.

11. The microprocessor circuit according to anyone of the claims 1 to 10,
**characterized in that**
a memory area (25) managed exclusively by the operating system is provided.

12. The microprocessor circuit according to anyone of the claims 1 to 11,
**characterized in that**
each memory area (22, 23. 24) is assigned to an address area (27, 28, 29) for buffering data, which address area being managed only by a program stored in the respective memory area (22, 23, 24).

13. A method for organizing access to data or programs stored in a memory (2) comprising at least one microprocessor (1), one memory (21) for an operating system and at least one memory (22, 23, 24) for free programming using individual external programs, wherein a plurality of memory areas having respective address spaces are provided in the memory (22, 23, 24) for free programming, wherein an identifier (program ID) is assigned to each address space and at least one bit sequence (ACR) including access rights is assigned to each address space of a memory area, wherein the bit sequence (ACR) including the access rights includes a first and a second access right, wherein the first access right regulates accesses between two memory areas (22, 23, 24) and the second access right regulates accesses within one memory area (22, 23, 24) and wherein exactly one external program is provided in each memory area (22, 23, 24), the method comprising the steps:
a) Determining a first program ID (PID _{PC}) of a currently executed code instruction of an external program using the identifier of a current address,
b) Determining a second program ID (PID _{Adr}) of an addressed memory area,
c) Comparing the first and the second program ID,
d1) Selecting the first or the second access right (ACR) depending on the result of the comparison in step c).

14. Method according to claim 13,
**characterized in that**
in case the code instruction of step a) is not a jump code, the following steps are executed:
d) Evaluating the selected access rights,
f1) Continuing the program codes of the external program if the access or the code instruction to the addressed memory area is allowed,
f2) Calling an error handling routing if the access or the code instruction to the addressed memory area is not allowed.

15. Method according to claim 13 or 14,
**characterized in that**
in case the first and the second program ID are identical, the second access right or a third access right are selected depending on the currently executed code instruction.

16. Method according to anyone of the claims 14 to 15,
**characterized in that**
after step f2) the following steps are executed:
g) Checking a rights buffer for an entry representing an allowed access of the memory area with the first program ID (PID _{PC}) to the memory area identified by the second program ID (PID _{Adr});
h1) Continuing the program code of the external program if the entry is present in the rights buffer; and
h2) Calling an error handling routing if the entry is not present.

17. The Method according to claim 13,
**characterized in that**
in case the code instruction of step a) is a jump instruction, the following steps are executed:
d2) Jumping to the called address,
e1) Continuing the program code of the external program at the addressed memory area if the first and the second program ID are identical,
e2) Reading out address content located in the addressed memory area if the first and the second program ID are not identical,
aa) Calling an error handling routine if the read out address content is not an entry instruction,
bb) Continuing the program code of the external program if the read out address content is an entry instruction.

18. Method according to claim 17,
**characterized in that**
before step d2) the step of storing the address of the currently executed jump instruction to a buffer (25...29) is executed.

19. Method according to claim 17 or 18,
**characterized in that**
the entry instruction is a fixedly prescribed bit sequence.

20. Method according to claim 18,
**characterized in that**
the buffer (25) is exclusively managed by the operating system.

21. Method according to any one of the claims 13 to 20,
**characterized in that**
the code instructions to which a first execution right is assigned, use a publicly accessible buffer (26) as the buffer.

22. Method according to any one of the claims 13 to 21,
**characterized in that**
code instructions to which a second execution right is assigned, use a buffer (27, 28, 29) assigned to the memory area, which buffer can be managed only by the program stored in the respective memory area and by the operating system.

## Revendications

1. Circuit de microprocesseur pour organiser l'accès à des données ou à des programmes archivés dans une mémoire (2), comprenant au moins un microprocesseur (1), une mémoire (21) pour un système d'exploitation et au moins une mémoire (22, 23, 24) pour la programmation libre avec des programmes individuels, dans lequel il est prévu dans la mémoire (22, 23, 24) pour la programmation libre, plusieurs zones de mémoire ayant des espaces d'adresse fictifs, un identifiant (programme-ID) étant affecté à chaque espace d'adresse et comprenant des moyens (7, 8), qui chargent l'identifiant (programme-ID) affecté à respectivement une zone de mémoire dans un premier registre (72) auxiliaire lors d'accès en mémoire avant l'adressage de la zone de mémoire et qui chargent l'identifiant (programme-ID) de la zone de mémoire adressée dans un deuxième registre (82) auxiliaire et qui effectuent une comparaison entre le premier et le deuxième registres (72, 82) auxiliaires,
**caractérisé en ce que**
à chaque espace d'adresse d'une zone de mémoire est affectée au moins une séquence (ACR) de bit contenant des droits d'accès et la séquence de bit contenant les droits d'accès comporte un premier et un deuxième droits d'accès, le premier droit d'accès réglant des accès entre deux zones (22, 23, 24) de mémoire et le deuxième droit d'accès réglant des accès au sein d'une zone (22, 23, 24) de mémoire.

2. Circuit de microprocesseur suivant la revendication 1,
**caractérisé en ce que**
à chaque adresse, un espace d'adresse est affecté à une séquence (ACR) de bit comportant des droits d'accès.

3. Circuit de microprocesseur suivant la revendication 1 ou 2,
**caractérisé en ce que**
les séquences (ACR) de bit comportant les droits d'accès sont mémorisées ensemble avec les adresses ou les blocs d'adresse et les identifiants (programme-ID) dans une table archivée dans la mémoire.

4. Circuit de microprocesseur suivant la revendication 3,
**caractérisé en ce que**
un bloc d'adresse est **caractérisé par** son début d'adresse ou sa fin d'adresse et par la longueur du bloc d'adresse.

5. Circuit de microprocesseur suivant la revendication 3,
**caractérisé en ce que**
un bloc d'adresse est **caractérisé par** une adresse inférieure et par une adresse supérieure.

6. Circuit de microprocesseur suivant la revendication 1 ou 2,
**caractérisé en ce que**
chaque espace d'adresse ou chaque adresse est muni de la séquence (ACR) de bit contenant le droit d'accès.

7. Circuit de microprocesseur suivant l'une des revendications 1 à 6,
**caractérisé en ce que**
il est prévu un troisième droit d'accès dans la séquence de bit, qui règle des accès au sein d'une zone (22, 23, 24) de mémoire.

8. Circuit de microprocesseur suivant l'une des revendications 1 à 7,
**caractérisé en ce que**
il est prévu une mémoire tampon de droits, qui comporte d'autres droits d'accès entre deux zones de mémoire, les droits d'accès pouvant être lus ou écrits par le système d'exploitation.

9. Circuit de microprocesseur suivant la revendication 8,
**caractérisé en ce que**
la mémoire tampon de droits comporte des affectations permises (accès) entre respectivement deux zones de mémoire.

10. Circuit de microprocesseur suivant la revendication 8 ou 9,
**caractérisé en ce que**
les affectations dans le tableau sont réalisées au moyen des identifiants (programme-ID) ou au moyen d'une table de conversion à l'aide de laquelle les identifiants respectifs peuvent être déterminés.

11. Circuit de microprocesseur suivant l'une des revendications 1 à 10,
**caractérisé en ce que**
il est prévu une zone (25) de mémoire gérée exclusivement par le système d'exploitation.

12. Circuit de microprocesseur suivant l'une des revendications 1 à 11,
**caractérisé en ce que**
à chaque zone (22, 23, 24) de mémoire est affectée une zone (27, 28, 29) d'adresse pour la mémorisation intermédiaire de données, qui peut être gérée par le programme archivé dans la zone (22, 23, 24) respective de mémoire.

13. Procédé d'organisation de l'accès à des données ou des programmes archivés dans une mémoire (2) par au moins un microprocesseur (1), une mémoire (21) pour un système d'exploitation et au moins une mémoire (22, 23, 24) pour la programmation libre pour des programmes extérieurs individuels, dans lequel on prévoit dans la mémoire (22, 23, 24) pour la programmation libre plusieurs zones de mémoire ayant des espaces d'adresse respectifs, un identifiant (programme-ID) étant affecté à chaque espace d'adresse et au moins une séquence (ACR) de bit comportant des droits d'accès étant affectée à chaque espace d'adresse d'une zone de la mémoire, la séquence de bit comportant les droits d'accès comportant un premier et un deuxième droits d'accès, le premier droit d'accès réglant des accès entre deux zones (22, 23, 24) de la mémoire et le deuxième droit d'accès réglant des accès au sein d'une zone (22, 23, 24) de la mémoire et on prévoit précisément un programme extérieur dans chaque zone (22, 23, 24) de la mémoire, comprenant les stades, dans lesquels :
a) on détermine un premier programme-ID (PID _{PC}) d'une instruction de code qui vient d'être exécutée d'un programme extérieur au moyen de l'identifiant d'une adresse présente précisément,
b) on détermine un deuxième programme-ID (PID _{Adr}) d'une zone de mémoire de la mémoire adressée,
c) on compare le premier et le deuxième programmes-ID,
d1) on sélectionne le premier ou le deuxième droit (ACR) d'accès en fonction du résultat de la comparaison au stade c).

14. Procédé suivant la revendication 13,
**caractérisé en ce que**, si l'instruction de code du stade a) n'est pas une instruction de saut, on effectue les stades suivants :
e) on exploite le droit d'accès sélectionné,
f1) on poursuit le code du programme extérieur, si l'accès ou l'instruction de code est autorisé sur la zone de mémoire adressée,
f2) on appelle une routine de traitement d'erreurs si l'accès ou l'instruction de code n'est pas autorisé sur la zone de la mémoire adressée.

15. Procédé suivant la revendication 13 ou 14,
**caractérisé en ce que**
on choisit pour un même premier et deuxième programmes-ID le deuxième droit d'accès ou un troisième droit d'accès en fonction du droit d'accès de l'instruction de code réalisé précisément.

16. Procédé suivant l'une des revendications 14 à 15,
**caractérisé en ce que**,
après le stade f2), on effectue les stades suivants :
g) on contrôle dans un tampon de droits l'entrée, qui représente un accès permis de la zone de la mémoire ayant le premier programme-ID (PID_{PC}) à la zone de la mémoire **caractérisée par** le deuxième programme-ID (PIC_{Adr}),
h1) on poursuit le code du programme extérieur si l'entrée est présente dans le tampon de droits,
h2) on appelle une routine de traitement d'erreur si l'entrée n'est pas présente.

17. Procédé suivant la revendication 13,
**caractérisé en ce que**
si l'instruction de code du stade a) est une instruction de saut, on effectue les stades suivants :
d2) on saute à l'adresse appelée,
e1) on poursuit le code du programme extérieur sur la zone de
la mémoire adressée, si le premier et le deuxième programmes-ID sont les mêmes,
e2) on lit un contenu d'adresse se trouvant dans la zone de la
mémoire adressée, si le premier et le deuxième programmes-ID ne sont pas les mêmes,
aa) on appelle une routine d'erreur, si le contenu d'adresse
lu n'est pas une instruction de saut,
bb) on poursuit le code du programme extérieur, si le
contenu d'adresse lu est une instruction de saut.

18. Procédé suivant la revendication 17,
**caractérisé en ce que**
avant le stade d2), on effectue le stade de mémorisation de l'adresse de l'instruction de saut qui vient d'être réalisée sur un tampon (25...29).

19. Procédé suivant la revendication 17 ou 18,
**caractérisé en ce que**
l'instruction de saut est une séquence de bit prescrite de manière fixe.

20. Procédé suivant la revendication 18,
**caractérisé en ce qu'**on gère le tampon (25) exclusivement par le système d'exploitation.

21. Procédé suivant l'une des revendications 13 à 20,
**caractérisé en ce que** des instructions de code, auxquelles est affecté un premier droit d'exécution, utilisent comme tampon un tampon accessible publiquement.

22. Procédé suivant l'une des revendications 13 à 21,
**caractérisé en ce que**
des instructions de code, auxquelles est affecté un deuxième droit d'exécution, utilisent un tampon (27, 28, 29) affecté à la zone de la mémoire, qui ne peut être gérée que par le programme archivé dans la zone respective de la mémoire et par le système d'exploitation.
